# EUROPÄISCHE PATENTSCHRIFT

(11) **EP 3 409 551 B1**
(45) Veröffentlichungstag und Bekanntmachung des Hinweises auf die Patenterteilung: **12.07.2023**
(21) Anmeldenummer: 18155937.8
(22) Anmeldetag: 09.02.2018
(51) Int. Cl.: B60W 50/08, B60W 50/00

(54) **VERFAHREN UND VORRICHTUNG ZUR UNTERSTÜTZUNG EINES IN EINEM FAHRZEUG BEFINDLICHEN FAHRZEUGINSASSEN**
METHOD AND DEVICE FOR SUPPORTING A VEHICLE OCCUPANT LOCATED IN A VEHICLE
PROCÉDÉ ET DISPOSITIF DE SUPPORT D'UN OCCUPANT DE VÉHICULE SE TROUVANT DANS UN VÉHICULE

(30) Priorität: 29.05.2017 DE 102017208971
(43) Veröffentlichungstag der Anmeldung: 05.12.2018
(73) Patentinhaber: VOLKSWAGEN AKTIENGESELLSCHAFT, 38440 Wolfsburg (DE)
(72) Erfinder: Gehrling, Sebastian, 45357 Essen (DE); Kampermann, Jens, 42781 Haan (DE); Strygulec, Sarah, 42105 Wuppertal (DE); Klomp, Sven, 31311 Uetze / Dollbergen (DE); Apfel, Jessica, 33102 Paderborn (DE); Jürgensmeier, Sandra, 33129 Delbrück (DE); Theimer, Wolfgang, 44879 Bochum (DE); Zielinski, Ernst, 44803 Bochum (DE); Köse, Esref, 44793 Bochum (DE); Ali, Ahmed, 44801 Bochum (DE)

(56) Entgegenhaltungen:
- DE-A1-102011 055 685
- DE-A1-102012 221 036
- DE-A1-102014 018 913

## Beschreibung

Die vorliegende Erfindung betrifft ein Verfahren zur Unterstützung eines in einem Fahrzeug befindlichen Fahrzeuginsassen. Die vorliegende Erfindung betrifft weiterhin eine Vorrichtung zur Durchführung des Verfahrens und ein Fahrzeug, das eingerichtet ist, ein solches Verfahren auszuführen oder eine solche Vorrichtung aufweist.

Mittlerweile sind eine Vielzahl verschiedenartiger Assistenzsysteme bekannt, die in Kraftfahrzeugen den Fahrer unterstützen können. Teilweise beschränken sich die Assistenzsysteme lediglich auf Signalisierungs- bzw. Warnfunktionen, teilweise greifen diese aber auch in den Antrieb oder die Steuerung des Fahrzeugs ein. Beides setzt eine Kenntnis der aktuellen Fahrzeugsituation voraus, die basierend auf Daten von geeigneten Sensoren gewonnen wird. Die Sensoren können hierbei technische Parameter des Fahrzeugs selber, wie z. B. für ein Fahrstabilisierungssystem (ESP) oder Antiblockiersystem (ABS), aber auch Informationen über das Fahrzeugumfeld ermitteln. Für die Beobachtung des Fahrzeugumfelds und darauf basierende Assistenzfunktionen wie Einparkhilfen, automatische Abstandswarnungen und -regelungen, Verkehrszeichenerkennungen, Totwinkel-Überwachungen oder Notbremssysteme zum Fußgängerschutz kommen hierbei verschiedene Techniken, häufig auch in Kombination, zum Einsatz. Besonders häufig werden Ultraschall-, Radar-, Lidar- und Kamerasysteme verwendet um Objekte im Umfeld des Fahrzeugs, wie Fußgänger, andere Fahrzeuge, Verkehrsschilder etc. zu identifizieren. Hierbei können die Sensordaten mehrerer Sensoren zusammengefasst bzw. verknüpft werden um die Qualität der gewonnenen Informationen zu verbessern. Sind beispielsweise die gewonnenen Informationen eines oder mehrerer Sensoren nicht verlässlich, so kann sich dieses mittels Daten weiterer Sensoren teilweise oder vollständig ausgleichen lassen. Ebenso können aber auch mittels Daten weiterer Sensoren bereits vorhandene Informationen bestätigen werden.

Weiterhin können Sensoren im Fahrzeug vorgesehen sein, die Informationen über das Verhalten und/oder den Zustand eines Fahrzeuginsassen, insbesondere des Fahrers, erfassen. Insbesondere kann mittels einer im Fahrzeuginnenraum angeordneten Kamera die Kopf- und Augenposition des Fahrers erfasst und durch geeignete Bildanalyseverfahren die Blickrichtung des Fahrers ermittelt werden oder eine auftretende Fahrermüdigkeit detektiert werden.

Die DE 10 2015 122 603 A1 offenbart ein Fahrerassistenzsystem mit einer auf den Fahrer gerichteten Kamera, um das Gesicht des Fahrers, speziell die Augen des Fahrers, aufzunehmen und basierend auf der Blickrichtung zu überwachen, ob der Fahrer abgelenkt ist bzw. von der Straße wegsieht. Falls der Fahrer wegsieht, stellt ein Fahrerstatusmodul eine anormale Situation fest und aktiviert das Fahrerassistenzsystem. Ebenso kann das Fahrerstatusmodul basierend darauf, wie weit und wie lange die Augen des Fahrers geöffnet sind, feststellen, ob der Fahrer schläfrig oder wach ist.

Ähnlich beschreibt die GB 2532457 A mittels eines Bildsensors die Aufmerksamkeit des Fahrers in Abhängigkeit von der Zeit, die der Fahrer auf die Straße schaut oder von der Straße wegsieht, zu bestimmen und basierend darauf die Empfindlichkeit eines Fahrerassistenzsystems zu kontrollieren.

In der DE 10 2014 201 036 A1 wird ein bildbasiertes Klassifikationsverfahren für die Ermittlung des Fahrerzustands und/oder des Fahrerverhaltens beschrieben um insbesondere die Übernahmefähigkeit eines Fahrers zu ermitteln. Hierfür werden Kameras derart angeordnet, dass bei beliebigen Kopfausrichtungen die Augen des Fahrers erfasst werden können, um die Blickrichtung des Fahrers zu ermitteln und statistisch über die Zeit auszuwerten.

Die DE 10 2012 221 036 A1 beschreibt ein Verfahren zum automatischen Einschalten eines Park- und/oder Rangierassistenzsystem in einem Kraftfahrzeug wobei das Blickverhalten des Fahrers ermittelt und ausgewertet wird. In Abhängigkeit der Auswertung des Blickverhaltens wird das Park- und/oder Rangierassistenzsystem eingeschaltet. Im Rahmen der Auswertung des Blickverhaltens wird vorzugsweise eine Park- und/oder Rangierintention des Fahrers basierend auf seinem Blickverhalten detektiert und dann in Abhängigkeit der detektierten Park- und/oder Rangierintention das Park- und/oder Rangierassistenzsystem automatisch eingeschaltet.

Es ist eine Aufgabe der Erfindung, ein verbessertes Verfahren und eine verbesserte Vorrichtung zur Unterstützung eines in einem Fahrzeug befindlichen Fahrzeuginsassen zur Verfügung zu stellen.

Diese Aufgabe wird durch ein Verfahren mit den Merkmalen des Anspruchs 1, sowie durch eine entsprechende Vorrichtung gemäß Anspruch 5 gelöst. Bevorzugte Ausgestaltungen der Erfindung sind Gegenstand der abhängigen Ansprüche.

Bei dem erfindungsgemäßen Verfahren zur Unterstützung eines in einem Fahrzeug befindlichen Fahrzeuginsassen werden Benutzerinformationen über das Verhalten und/oder den Zustand eines Fahrzeuginsassen sowie Fahrzeugparameter des Fahrzeugs erfasst. Die erfassten Benutzerinformationen und Fahrzeugparameter werden zusammengeführt und gemeinsam analysiert. Aus den gemeinsam analysierten Benutzerinformationen und Fahrzeugparametern wird mindestens ein Verhaltensmuster des Fahrzeuginsassen bestimmt. Das Verhaltensmuster wird zusammen mit den Benutzerinformationen abgespeichert. Bei einer darauffolgenden Erfassung von Benutzerinformationen werden diese mit den Benutzerinformationen des mindestens einen abgespeicherten Verhaltensmusters verglichen. Bei einer Übereinstimmung des Verhaltensmusters wird eine Fahrzeugfunktion automatisch ausgeführt.

Entgegen den herkömmlichen Assistenzsystemen, die standardisiert auf die Eingaben eines Fahrzeuginsassen, insbesondere des Fahrers, reagieren, ermöglicht das erfindungsgemäße Verfahren individuelle Verhaltensmuster zu erkennen bzw. zu erlernen und den Fahrzeuginsassen basierend darauf in Situationen, in denen ein Verhaltensmuster wiedererkannt wird, effizienter, schneller oder komfortabler zu unterstützen.

Gemäß einer vorteilhaften Ausführungsform der Erfindung wird vorgeschlagen, solange bei dem erfindungsgemäßen Verfahren noch kein Verhaltensmuster ermittelt wurde, dass ein aktuell ermitteltes Verhaltensmuster unmittelbar abgespeichert wird und wenn bereits Verhaltensmuster erlernt und abgespeichert worden sind, zunächst ein Vergleich des aktuell ermittelten Verhaltensmusters mit bereits vorliegenden Verhaltensmustern erfolgt, wobei eine Fahrzeugfunktion automatisch ausgeführt wird, wenn ein Verhaltensmuster wiedererkannt wurde und wobei ein neues, bisher nicht bekanntes Verhaltensmuster abgespeichert wird.

Eine weitere Ausführungsform der Erfindung umfasst, dass bei der Erlernung der Verhaltensmuster und der darauf beruhenden Unterstützung des Fahrzeuginsassen zur Erhöhung der Genauigkeit eine Unterscheidung je nach Fahrzeuginsasse vorgenommen wird.

Gemäß einer weiteren Ausführungsform der Erfindung werden bei einer Änderung eines Fahrzeugparameters in Folge einer von dem Fahrzeuginsassen ausgeführten Bedienhandlung die vor der Bedienhandlung erfassten Benutzerinformationen und Fahrzeugparameter analysiert. Auf diese Weise lässt sich der Analyse- und Speicheraufwand reduzieren.

Vorteilhafterweise umfassen die Benutzerinformationen die Blickrichtung und/oder den Gesichtsausdruck und/oder die Ausrichtung des Kopfes eines Fahrzeuginsassen.

Besonders vorteilhaft kann das Verfahren angewendet werden wenn Benutzerinformationen des Fahrers des Fahrzeugs erfasst werden.

Gemäß einer weiteren Ausführungsform der Erfindung werden sowohl die Augen des Fahrzeuginsassen erfasst und es wird mittels eines Bildauswerteverfahrens ermittelt, dass der Fahrzeuginsasse geblendet wird, als auch ein Ausklappen bzw. Verkippen einer Sonnenblende des Fahrzeugs durch den Fahrzeuginsassen erfasst, und wobei die Sonnenblende automatisch ausgerichtet wird, wenn zu einem späteren Zeitpunkt ermittelt wird, dass der Fahrzeuginsasse erneut geblendet wird.

Zudem werden gemäß einer weiteren Ausführungsform der Erfindung die Augen des Beifahrers und eine Betätigung der Sonnenblende durch den Beifahrer erfasst und die Sonnenblende für den Beifahrer wird automatisch ausgerichtet.

Entsprechend umfasst eine erfindungsgemäße Vorrichtung zur Unterstützung eines in einem Fahrzeug befindlichen Fahrzeuginsassen einen ersten Sensor zur Erfassung von Benutzerinformationen über das Verhalten und/oder den Zustand eines Fahrzeuginsassen und einen zweiten Sensor zur Erfassung von Fahrzeugparametern. Einer Analyse- und Steuereinheit werden Sensordaten von dem ersten und zweiten Sensor zugeführt. Die Analyse- und Steuereinheit analysiert die Sensordaten, bestimmt mindestens ein Verhaltensmuster des Fahrzeuginsassen, vergleicht darauffolgende Sensordaten von dem ersten Sensor mit dem mindestens einen abgespeicherten Verhaltensmuster und steuert bei einer Wiedererkennung des Verhaltensmusters eine Fahrzeugfunktion automatisch an. In einer Speichereinheit wird das mindestens eine Verhaltensmuster abgespeichert.

Vorzugsweise ist der erste Sensor ein im Fahrzeug auf den Fahrzeuginsassen ausgerichteter Kamerasensor, der die Blickrichtung und/oder den Gesichtsausdruck und/oder die Ausrichtung des Kopfes eines Fahrzeuginsassen erfasst.

Vorteilhafterweise ermittelt der zweite Sensor einen oder mehrere der folgenden Fahrzeugparameter:
- die Betätigung eines Bedienelements des Fahrzeugs, wie beispielsweise des Fahrtrichtungsanzeigers, des Lenkrads, des Gas- oder Bremspedals;
- die Position und/oder Trajektorie des Fahrzeugs.

Ebenso kann es von Vorteil sein, wenn ein dritter Sensor zur Erfassung von fahrzeugexternen Objekten im Fahrzeugumfeld vorgesehen ist und die Sensordaten von dem dritten Sensor ebenfalls der Analyse- und Steuereinheit zugeführt werden und von dieser analysiert werden.

Gemäß einer Ausführungsform der Erfindung erfolgt bei einer Übereinstimmung des Verhaltensmusters eine Anpassung einer Benutzerschnittstelle des Fahrzeugs.

Gemäß einer weiteren Ausführungsform der Erfindung wird bei einer Übereinstimmung des Verhaltensmusters eine Funktion eines Fahrerassistenzsystems ausgeführt.

Vorzugsweise wird das erfindungsgemäße Verfahren oder die erfindungsgemäße Vorrichtung in einem Kraftfahrzeug eingesetzt.

Weitere Merkmale der vorliegenden Erfindung werden aus der nachfolgenden Beschreibung und den Ansprüchen in Verbindung mit den Figuren ersichtlich.
- Fig. 1: zeigt schematisch das erfindungsgemäße Verfahren zur Unterstützung eines in einem Fahrzeug befindlichen Fahrzeuginsassen; und
- Fig. 2: zeigt schematisch ein Blockschaltbild einer erfindungsgemäßen Vorrichtung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung, wie er in den Ansprüchen definiert ist, zu verlassen.

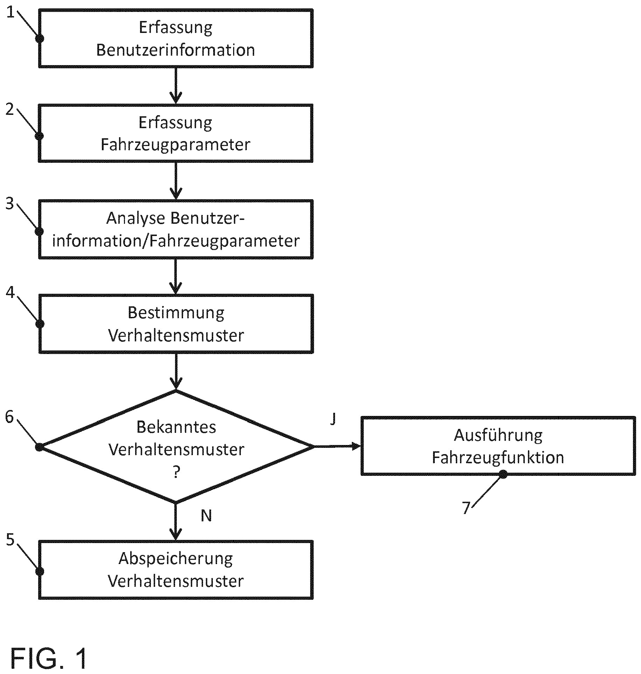

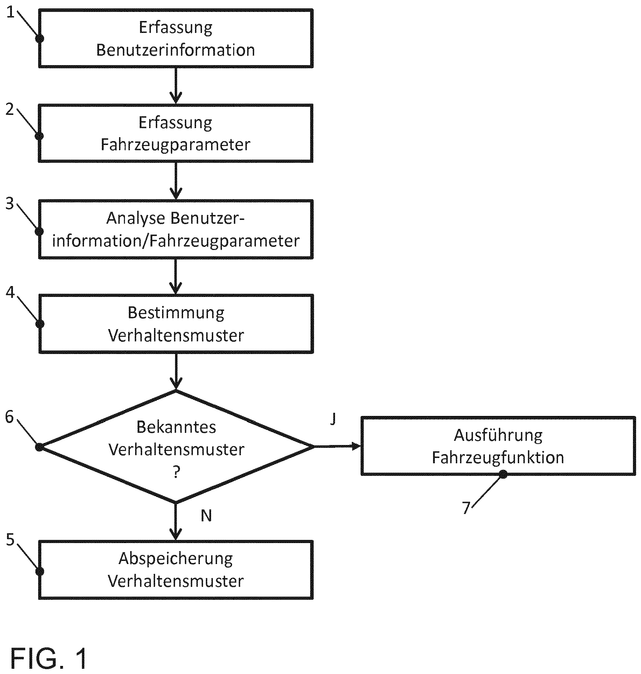

Figur 1 zeigt schematisch das erfindungsgemäße Verfahren zur Unterstützung eines in einem Fahrzeug befindlichen Fahrzeuginsassen. Gemäß Verfahrensschritt 1 erfolgt eine Erfassung von Benutzerinformationen. Grundsätzlich können hierbei beliebige Informationen über das

Benutzerverhalten und/oder den Benutzerzustand eines Fahrzeuginsassen ermittelt werden, solange diese mit der Benutzung des Fahrzeugs durch den Fahrzeuginsassen in Zusammenhang stehen und bei mehrmaliger Ausführung der gleichen Benutzungshandlung identisch oder zumindest ähnlich sind und damit nach einer Lernphase ermöglichen, Intentionen des Fahrzeuginsassen bei zukünftigen Benutzungshandlungen vorherzusagen. Besonders aussagekräftig ist es hierbei die Blickrichtung, den Gesichtsausdruck und/oder die Ausrichtung des Kopfes eines Fahrzeuginsassen, insbesondere des Fahrers des Fahrzeuges, zu bestimmen.

Parallel zu der Erfassung der Benutzerinformationen werden in einem Verfahrensschritt 2 Fahrzeugparameter erfasst. Je nach Anwendungsfall kann es sich hierbei um verschiedenartige Parameter wie beispielsweise die Betätigung eines Bedienelements des Fahrzeugs, wie beispielsweise des Fahrtrichtungsanzeigers, des Lenkrads, des Gas- oder Bremspedals, die Trajektorie des Fahrzeugs oder die Position des Fahrzeugs handeln.

In Verfahrensschritt 3 werden die Benutzerinformationen und die Fahrzeugparameter zusammengeführt und gemeinsam ausgewertet. In Verfahrensschritt 4 wird hieraus ein Verhaltensmuster bestimmt. Solange noch keine Verhaltensmuster ermittelt wurden, beispielsweise in einer Initialisierungsphase, wird das Verhaltensmuster unmittelbar in Verfahrensschritt 5 abgespeichert um später eine Wiedererkennung zu ermöglichen und basierend darauf den Fahrzeuginsassen zu unterstützen. Sind dagegen ein oder mehrere Verhaltensmuster von dem System bereits erlernt und abgespeichert worden, so kann in Verfahrensschritt 6 ein Vergleich des aktuell ermittelten Verhaltensmuster mit den bereits vorliegenden Verhaltensmustern erfolgen. Wird hierbei ein Verhaltensmuster wiedererkannt, so kann in Verfahrensschritt 7 eine Fahrzeugfunktion automatisch ausgeführt werden. Hierbei kann beispielsweise eine Funktion eines Fahrerassistenzsystems ausgeführt werden oder eine Benutzerschnittstelle geeignet angepasst werden. Liegt dagegen ein neues, bisher nicht bekanntes Verhaltensmuster vor, so wird dieses ebenfalls abgespeichert um zukünftig darauf zurückgreifen zu können.

Zur weiteren Verdeutlichung werden im folgende Anwendungsbeispiele der Erfindung genannt.

Bei einem Spurwechsel, beispielsweise auf der Autobahn, führt der Fahrer normalerweise einen Schulterblick durch und schaut wiederholt in den Seitenspiegel bevor er den Spurwechsel durchführt. Erfindungsgemäß wird der Fahrer nun beispielsweise durch ein kamerabasiertes Eye-Tracking-System beobachtet. Der Schulterblick und die wiederholten Blicke in den Seitenspiegel werden von dem Eye-Tracking-System erfasst und durch geeignete Bildverarbeitungsverfahren analysiert.

Gleichzeitig überwachen Fahrzeugsensoren Parameter des Fahrzeugs und erfassen, wenn durch den Fahrer der Blinker aktiviert wird. Zusätzlich kann, beispielsweise durch Sensoren welche die Lenkrad- oder die Reifenstellung erfassen oder durch eine Kompassfunktion eines Navigationssystems, ein Spurwechsel des Fahrzeugs ermittelt werden. Ergeben die Sensordaten, dass das Fahrzeug zunächst für einen gewissen Zeitraum in eine gleichbleibende Richtung fährt, dann eine, mit dem Spurwechsel einhergehende, kurzzeitige Richtungsänderung erfolgt und sich das Fahrzeug im Anschluss wieder in der ursprünglichen Richtung fortbewegt, so kann von einem Spurwechsel ausgegangen werden.

Durch eine Zusammenführung und gemeinsame Analyse dieser Benutzerinformationen und Fahrzeugparameter lässt sich nun ein Verhaltensmuster für den Spurwechsel ermitteln. Ist von den Fahrzeugparametern bekannt, das ein Spurwechsel erfolgt ist und ergeben die Benutzerinformationen, dass der Fahrer vor dem Spurwechsel über die Schulter und in den Seitenspiegel geblickt hat, so kann dieses als Verhaltensmuster abgespeichert werden. Wird nun zu einem späteren Zeitpunkt ermittelt, dass der Fahrer über die Schulter und in den Seitenspiegel blickt, so wird dieses Verhaltensmuster unter den bekannten, abgespeicherten Verhaltensmustern wiedererkannt. Das Fahrerassistenzsystem kann dann frühzeitig auf die vorliegende Situation reagieren, indem beispielsweise der Blinker automatisch betätigt oder der Fahrer vor einem schlecht zu sehenden oder mit hoher Geschwindigkeit herannahenden Fahrzeug durch eine Anzeige, beispielsweise am oder im Seitenspiegel, gewarnt wird.

Auch wenn der Fahrer eines Fahrzeugs dieses in eine Parklücke einparken will, kann ihn das erfindungsgemäße Verfahren hierbei unterstützen. Sind bei früheren Einpark-Manövern das Verhalten des Fahrers, Fahrzeugparameter und ggfs. auch die Fahrzeugumgebung erfasst worden, so kann das entsprechende Verhaltensmuster bei erneuten Einpark-Manövern wiedererkannt werden.

So kann durch ein kamerabasiertes Eye-Tracking-System ermittelt werden, dass der Fahrer durch die Seiten-, das Front- oder Rückfenster und ggfs. einen Seitenspiegel die Fahrzeugumgebung betrachtet. Durch geeignete Sensoren, beispielsweise Ultraschallsensoren, können gleichzeitig Objekte in der Fahrzeugumgebung und auch der Abstand dieser Objekte von dem Fahrzeug erfasst werden und einen Hinweis darauf geben, dass der Fahrer das Fahrzeug zunächst neben einer Parklücke platziert und dann in diese manövriert hat. Zusätzlich kann ausgewertet werden, ob die Objekte sich in Richtung der erfassten Blickrichtung des Fahrers befinden. Weiterhin können wie im obigen Anwendungsbeispiel Fahrzeugsensoren Parameter des Fahrzeugs wie die Betätigung des Blinkers, ein starkes Einschlages des Lenkrads, typischerweise erst in einer Richtung und dann in gegenläufiger Richtung und ob das Fahrzeug hierbei vorwärts bzw. rückwärts bewegt wurde, erfassen. Wird das für ein Einpark-Manöver typische Verhaltensmuster nun zu Beginn eines erneuten Einpark-Manövers wiedererkannt, so kann beispielsweise die Einparkhilfe automatisch aktiviert werden.

Ein weiteres Anwendungsbeispiel, das nicht auf die Unterstützung des Fahrers beschränkt ist sondern auch für andere Fahrzeuginsassen, insbesondere den Beifahrer, zum Einsatz kommen kann, bezieht sich auf eine automatische Ausrichtung einer Sonnenblende.

Werden die Augen des Fahrzeuginsassen, erfasst, so kann mittels geeigneter Bildauswerteverfahren auch die Pupillengröße ermittelt werden. Eine plötzlich auftretende deutliche Verringerung der Pupillengröße kann dann darauf hindeuten, dass der Fahrzeuginsasse geblendet wird. Zusätzlich oder stattdessen kann mittels des Bildauswerteverfahrens auch ein Zusammenkneifen der Augen registriert werden. Gegebenenfalls können diese Informationen noch mit Sensordaten eines Lichtsensors kombiniert werden. An der Sonnenblende sind Sensoren vorgesehen, die ein Ausklappen bzw. Verkippen der Sonnenblende durch den Fahrzeuginsassen erfassen, somit wird bei Zusammenführen der vorliegenden Informationen ein entsprechendes Verhaltensmuster bestimmt und abgespeichert. Wird nun zu einem späteren Zeitpunkt anhand der Beobachtung der Augen des Fahrzeuginsassen festgestellt, dass dieser erneut geblendet wird, so kann die Sonnenblende bei Vorliegen entsprechender Aktuatoren automatisch ausgerichtet werden ohne das der Fahrzeuginsasse hierfür aktiv werden muss.

Die Verhaltensmuster verschiedener Personen bei den oben beschriebenen Anwendungsbeispielen sind üblicherweise ähnlich, aber nicht identisch. Daher kann es zur Erhöhung der Genauigkeit des Assistenzsystems vorgesehen sein bei der Erlernung der Verhaltensmuster und der darauf beruhenden Unterstützung des Fahrzeuginsassen eine Unterscheidung je nach Fahrzeuginsasse vorzunehmen. Dieses kann beispielsweise durch Verfahren zur Gesichtserkennung, aber auch anhand anderer biometrischer Verfahren zur Personenidentifikation im Fahrzeug, erfolgen.

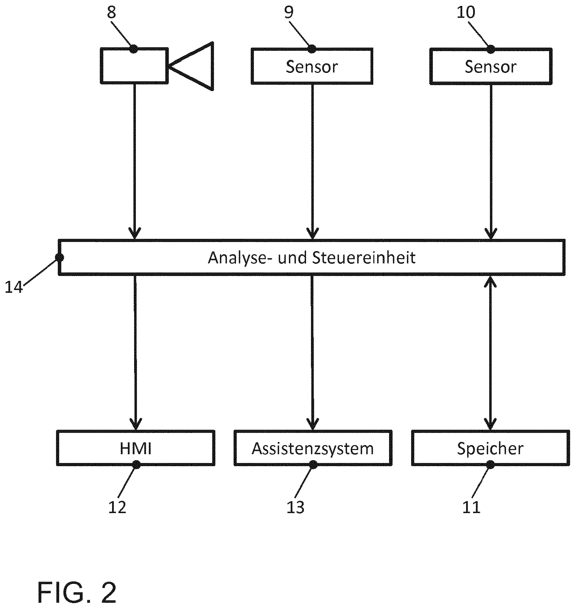

Figur 2 zeigt schematisch ein Blockschaltbild einer erfindungsgemäßen Vorrichtung. Eine im Fahrzeuginnenraum, beispielsweise im Armaturenbrett oder im Bereich des Rückspiegels, angeordnete Kamera 8 erfasst die Kopfposition des Fahrers und ermittelt durch geeignete Bildanalyseverfahren die Augenposition und Blickrichtung, aber ggfs. auch die Mimik des Fahrers. Vorzugsweise handelt es sich hierbei um eine NIR-Kamera (englisch: near infrared, NIR), die sich an den sichtbaren Bereich unmittelbar anschließende kurzwellige Infrarotstrahlung erfasst. In diesem Fall kann eine Beleuchtung, insbesondere im Dunkeln, durch eine oder mehrere nicht dargestellte NIR-LEDs erfolgen, ohne dass dieses für den Fahrer störend ist oder ihn blenden kann. Die NIR-Kamera und die NIR-LEDs können separat oder aber auch in einem gemeinsamen Sensorbauteil verbaut werden. Zur Erfassung der Fahrzeugparameter ist mindestens ein Sensor 9 im Fahrzeug verbaut. Weiterhin ist mindestens ein Sensor 10 zur Erfassung des Fahrzeugumfelds vorgesehen. Die Sensordaten werden einer Analyse- und Steuereinheit 14 zugeführt, in der die Sensordaten ausgewertet werden um Verhaltensmuster zu bestimmen, einen Vergleich mit bekannten Verhaltensmustern vorzunehmen und in Abhängigkeit davon beispielsweise ein HMI 12 oder ein Fahrerassistenzsystem 13 ansteuern zu können. Um die bekannten Verhaltensmuster vorhalten zu können, ist ein Speicher 11 vorgesehen.

Die Erfindung kann in beliebigen Bereichen der Fahrzeugtechnik eingesetzt werden.

### Bezugszeichenliste

- 1: Verfahrensschritt mit Erfassung von Benutzerinformationen
- 2: Verfahrensschritt mit Erfassung von Fahrzeugparametern
- 3: Verfahrensschritt mit Analyse der Benutzerinformationen und Fahrzeugparameter
- 4: Verfahrensschritt mit Bestimmung eines Verhaltensmusters
- 5: Verfahrensschritt mit Abspeicherung des Verhaltensmusters
- 6: Verfahrensschritt mit Überprüfung ob ein bekanntes Verhaltensmuster vorliegt
- 7: Verfahrensschritt mit Ausführung einer Fahrzeugfunktion
- 8: Kamera zur Beobachtung des Fahrzeuginsassen
- 9: Sensor für Fahrzeugparameter
- 10: Sensor zur Erfassung des Fahrzeugumfelds
- 11: Speicher
- 12: HMI
- 13: Assistenzsystem
- 14: Analyse- und Steuereinheit

## Patentansprüche

1. Verfahren zur Unterstützung eines in einem Fahrzeug befindlichen Fahrzeuginsassen, wobei bei dem Verfahren
- Benutzerinformationen über das Verhalten und/oder den Zustand eines Fahrzeuginsassen erfasst (1) werden;
- Fahrzeugparameter des Fahrzeugs erfasst (2) werden;
- die erfassten Benutzerinformationen und Fahrzeugparameter zusammengeführt und gemeinsam analysiert (3) werden;
**dadurch gekennzeichnet, dass**
- aus den analysierten Benutzerinformationen und Fahrzeugparametern mindestens ein Verhaltensmuster des Fahrzeuginsassen bestimmt (4) wird;
- das Verhaltensmuster zusammen mit den Benutzerinformationen abgespeichert (5) wird; und
- bei einer darauffolgenden Erfassung von Benutzerinformationen diese mit den Benutzerinformationen des mindestens einen abgespeicherten Verhaltensmusters verglichen (6) werden und bei einer Übereinstimmung des Verhaltensmusters eine Fahrzeugfunktion automatisch ausgeführt (7) wird.

2. Verfahren nach Anspruch 1, wobei
- solange noch keine Verhaltensmuster ermittelt wurde, ein aktuell ermitteltes Verhaltensmuster unmittelbar abgespeichert wird;
- wenn bereits Verhaltensmuster erlernt und abgespeichert worden sind, zunächst ein Vergleich des aktuell ermittelten Verhaltensmusters mit bereits vorliegenden Verhaltensmustern erfolgt, wobei eine Fahrzeugfunktion automatisch ausgeführt wird, wenn ein Verhaltensmuster wiedererkannt wurde und wobei ein neues, bisher nicht bekanntes Verhaltensmuster abgespeichert wird.

3. Verfahren nach Anspruch 1 oder 2, wobei bei der Erlernung der Verhaltensmuster und der darauf beruhenden Unterstützung des Fahrzeuginsassen zur Erhöhung der Genauigkeit eine Unterscheidung je nach Fahrzeuginsasse vorgenommen wird.

4. Verfahren nach einem der vorhergehenden Ansprüche , wobei bei einer Änderung eines Fahrzeugparameters in Folge einer von dem Fahrzeuginsassen ausgeführten Bedienhandlung die vor der Bedienhandlung erfassten Benutzerinformationen und Fahrzeugparameter analysiert (3) werden.

5. Verfahren nach einem der vorhergehenden Ansprüche, wobei die Benutzerinformationen die Blickrichtung und/oder den Gesichtsausdruck und/oder die Ausrichtung des Kopfes eines Fahrzeuginsassen umfassen.

6. Verfahren nach einem der vorhergehenden Ansprüche, wobei Benutzerinformationen des Fahrers des Fahrzeugs erfasst werden.

7. Verfahren nach einem der vorhergehenden Ansprüche, wobei sowohl die Augen des Fahrzeuginsassen erfasst werden und mittels eines Bildauswerteverfahrens ermittelt wird, dass der Fahrzeuginsasse geblendet wird, als auch ein Ausklappen bzw. Verkippen einer Sonnenblende des Fahrzeugs durch den Fahrzeuginsassen erfasst wird, und wobei die Sonnenblende automatisch ausgerichtet wird, wenn zu einem späteren Zeitpunkt ermittelt wird, dass der Fahrzeuginsasse erneut geblendet wird.

8. Verfahren nach Anspruch 7, wobei die Augen des Beifahrers und eine Betätigung der Sonnenblende durch den Beifahrer erfasst werden und die Sonnenblende für den Beifahrer automatisch ausgerichtet wird.

9. Vorrichtung zur Unterstützung eines in einem Fahrzeug befindlichen Fahrzeuginsassen, mit einem
- ersten Sensor (8) zur Erfassung von Benutzerinformationen über das Verhalten und/oder den Zustand eines Fahrzeuginsassen;
- zweiten Sensor (9) zur Erfassung von Fahrzeugparametern;
- eine Analyse- und Steuereinheit (14), der Sensordaten von dem ersten und zweiten Sensor (8, 9) zugeführt werden und die die Sensordaten analysiert und mindestens ein Verhaltensmuster des Fahrzeuginsassen bestimmt und darauffolgende Sensordaten von dem ersten Sensor (8) mit dem mindestens einen abgespeicherten Verhaltensmuster vergleicht und bei einer Wiedererkennung des Verhaltensmusters eine Fahrzeugfunktion automatisch ansteuert; und
- einer Speichereinheit (11) zur Abspeicherung des mindestens einen Verhaltensmusters.

10. Vorrichtung nach Anspruch 9, wobei der erste Sensor (8) ein im Fahrzeug auf den Fahrzeuginsassen ausgerichteter Kamerasensor ist, der die Blickrichtung und/oder den Gesichtsausdruck und/oder die Ausrichtung des Kopfes eines Fahrzeuginsassen erfasst.

11. Vorrichtung nach einem der Ansprüche 9 oder 10, wobei der zweite Sensor (9) einen oder mehrere der folgenden Fahrzeugparameter ermittelt:
- die Betätigung eines Bedienelements des Fahrzeugs, wie beispielsweise des Fahrtrichtungsanzeigers, des Lenkrads, des Gas- oder Bremspedals;
- die Position und/oder Trajektorie des Fahrzeugs.

12. Vorrichtung nach einem der Ansprüche 9 bis 11, wobei ein dritter Sensor (10) zur Erfassung von fahrzeugexternen Objekten im Fahrzeugumfeld vorgesehen ist und die Sensordaten von dem dritten Sensor ebenfalls der Analyse- und Steuereinheit (14) zugeführt werden und von dieser analysiert werden.

13. Vorrichtung nach einem der Ansprüche 9 bis 12, wobei bei einer Übereinstimmung des Verhaltensmusters eine Anpassung einer Benutzerschnittstelle (12) des Fahrzeugs erfolgt.

14. Vorrichtung nach einem der Ansprüche 9 bis 13, wobei bei einer Übereinstimmung des Verhaltensmusters eine Funktion eines Fahrerassistenzsystems (13) ausgeführt wird.

15. Kraftfahrzeug, das es eine Vorrichtung gemäß einem der Ansprüche 9 bis 14 aufweist oder eingerichtet ist, ein Verfahren gemäß einem der Ansprüche 1 bis 8 auszuführen.

## Claims

1. Method for assisting a vehicle occupant located in a vehicle, in the method
- user information regarding the behavior and/or state of a vehicle occupant being detected (1);
- vehicle parameters of the vehicle being detected (2);
- the detected user information and vehicle parameters being merged and analyzed jointly (3);
**characterized in that**
- at least one behavior pattern of the vehicle occupant is determined (4) from the analyzed user information and vehicle parameters;
- the behavior pattern is stored (5) together with the user information; and
- upon subsequent detection of user information, this user information is compared (6) with the user information of the at least one stored behavior pattern and, when the behavior pattern matches, a vehicle function is automatically executed (7).

2. Method according to claim 1, wherein
- as long as no behavior patterns have been determined, a currently determined behavior pattern is directly stored;
- if behavior patterns have already been learned and stored, first a comparison of the currently determined behavior pattern with already present behavior patterns takes place, wherein a vehicle function is executed automatically if a behavior pattern has been recognized and wherein a new, previously unknown behavior pattern is stored.

3. Method according to claim 1 or 2, wherein, during learning of the behavior pattern and the assistance to the vehicle occupant relating thereto, a distinction is made for each vehicle occupant in order to increase the accuracy.

4. Method according to any of the preceding claims, wherein, when a vehicle parameter is changed as a result of an operating action executed by the vehicle occupant, the user information and vehicle parameters detected before the operating action are analyzed (3).

5. Method according to any of the preceding claims, wherein the user information comprises the gaze direction and/or the facial expression and/or the orientation of the head of a vehicle occupant.

6. Method according to any of the preceding claims, wherein user information of the driver of the vehicle is detected.

7. Method according to any of the preceding claims, wherein the eyes of the vehicle occupant are detected and an image evaluation method determines that the vehicle occupant is being dazzled, and also a folding-out or tilting of a sun visor of the vehicle by the vehicle occupant is detected, and wherein the sun visor is automatically aligned if it is determined at a later time that the vehicle occupant is being dazzled again.

8. Method according to claim 7, wherein the eyes of the passenger and an actuation of the sun visor by the passenger are detected and the sun visor is automatically aligned for the passenger.

9. Device for assisting a vehicle occupant located in a vehicle, comprising
- a first sensor (8) for detecting user information regarding the behavior and/or state of a vehicle occupant;
- a second sensor (9) for detecting vehicle parameters;
- an analysis and control unit (14) which is supplied with sensor data from the first and second sensors (8, 9) and which analyzes the sensor data and determines at least one behavior pattern of the vehicle occupant and compares the subsequent sensor data from the first sensor (8) with the at least one stored behavior pattern and automatically activates a vehicle function when the behavior pattern is recognized; and
- a storage unit (11) for storing the at least one behavior pattern.

10. Device according to claim 9, wherein the first sensor (8) is a camera sensor in the vehicle and facing the vehicle occupant, which camera sensor detects the gaze direction and/or the facial expression and/or the orientation of the head of a vehicle occupant.

11. Device according to either claim 9 or 10, wherein the second sensor (9) determines one or more of the following vehicle parameters:
- the actuation of an operating element of the vehicle, such as the direction indicator, the steering wheel, the accelerator or brake pedal;
- the position and/or trajectory of the vehicle.

12. Device according to any of claims 9 to 11, wherein a third sensor (10) is provided for detecting objects outside the vehicle in the vehicle environment and the sensor data are likewise fed from the third sensor to the analysis and control unit (14) and are analyzed by the latter.

13. Device according to any of claims 9 to 12, wherein, when the behavior pattern matches, a user interface (12) of the vehicle is adjusted.

14. Device according to any of claims 9 to 13, wherein, when the behavior pattern matches, a function of a driver assistance system (13) is executed.

15. Motor vehicle, that comprises a device according to any of claims 9 to 14 or is designed to execute a method according to any of claims 1 to 8.

## Revendications

1. Procédé de support d'un occupant de véhicule se trouvant dans un véhicule, dans lequel, dans le procédé
- des informations d'utilisateur concernant le comportement et/ou l'état d'un occupant de véhicule sont détectées (1) ;
- des paramètres de véhicule du véhicule sont détectés (2) ;
- les informations d'utilisateur et paramètres de véhicule détectés sont rassemblés et analysés ensemble (3) ;
**caractérisé en ce que**
- au moins un modèle de comportement de l'occupant de véhicule est déterminé (4) à partir des informations d'utilisateur et paramètres de véhicule analysés ;
- le modèle de comportement est enregistré (5) conjointement avec les informations d'utilisateur ; et
- lors d'une détection ultérieure d'informations d'utilisateur, celles-ci sont comparées (6) aux informations d'utilisation de l'au moins un modèle de comportement enregistré et lors d'une concordance du modèle de comportement, une fonction de véhicule est exécutée (7) automatiquement.

2. Procédé selon la revendication 1, dans lequel
- tant qu'aucun modèle de comportement n'a encore été déterminé, un modèle de comportement déterminé actuel est enregistré directement ;
- lorsque des modèles de comportement ont déjà été appris et enregistrés, une comparaison du modèle de comportement déterminé actuel et des modèles de comportement déjà existants est d'abord effectuée, dans lequel une fonction de véhicule est exécutée automatiquement lorsqu'un modèle de comportement a été reconnu et dans lequel un nouveau modèle de comportement, inconnu jusqu'à présent, est enregistré.

3. Procédé selon la revendication 1 ou 2, dans lequel lors de l'apprentissage du modèle de comportement et du support qui en découle de l'occupant de véhicule, une différenciation est effectuée selon l'occupant de véhicule pour améliorer la précision.

4. Procédé selon l'une quelconque des revendications précédentes, dans lequel lors d'une modification d'un paramètre de véhicule à la suite d'une manipulation exécutée par l'occupant de véhicule, les informations d'utilisateur et paramètres de véhicule détectés avant la manipulation sont analysés (3).

5. Procédé selon l'une quelconque des revendications précédentes, dans lequel les informations d'utilisateur comprennent la direction du regard et/ou l'expression du visage et/ou l'orientation de la tête d'un occupant de véhicule.

6. Procédé selon l'une quelconque des revendications précédentes, dans lequel les informations d'utilisateur du conducteur du véhicule sont détectées.

7. Procédé selon l'une quelconque des revendications précédentes, dans lequel aussi bien les yeux de l'occupant de véhicule sont détectés et il est déterminé au moyen d'un procédé d'évaluation d'image, que l'occupant de véhicule est ébloui, et également un déploiement ou un basculement d'un pare-soleil du véhicule par l'occupant de véhicule est détecté et dans lequel le pare-soleil est orienté automatiquement lorsqu'il est déterminé à un moment ultérieur que l'occupant de véhicule est de nouveau ébloui.

8. Procédé selon la revendication 7, dans lequel les yeux d'un passager et un actionnement du pare-soleil par le passager sont détectés et le pare-soleil pour le passager est orienté automatiquement.

9. Dispositif de support d'un occupant de véhicule se trouvant dans un véhicule, comportant
- un premier capteur (8) pour la détection d'informations d'utilisateur concernant le comportement et/ou l'état d'un occupant de véhicule ;
- un deuxième capteur (9) pour la détection de paramètres de véhicule ;
- une unité d'analyse et de commande (14), à laquelle sont fournies les données de capteur des premier et deuxième capteurs (8, 9) et qui analyse les données de capteur et détermine au moins un modèle de comportement de l'occupant de véhicule et compare les données de capteur ultérieures du premier capteur (8) à l'au moins un modèle de comportement enregistré et, lorsque le modèle de comportement est reconnu, commande automatiquement une fonction de véhicule ; et
- une unité d'enregistrement (11) pour l'enregistrement de l'au moins un modèle de comportement.

10. Dispositif selon la revendication 9, dans lequel le premier capteur (8) est un capteur de caméra orienté sur l'occupant de véhicule dans le véhicule, qui détecte la direction du regard et/ou l'expression du visage et/ou l'orientation de la tête d'un occupant de véhicule.

11. Dispositif selon l'une des revendications 9 ou 10, dans lequel le deuxième capteur (9) détermine un ou plusieurs des paramètres de véhicule suivants :
- l'actionnement d'un élément de commande du véhicule, par exemple l'indicateur de direction, du volant, de la pédale d'accélérateur ou de frein ;
- la position et/ou la trajectoire du véhicule.

12. Dispositif selon l'une des revendications 9 à 11, dans lequel un troisième capteur (10) pour la détection d'objets externes au véhicule dans l'environnement du véhicule est prévu et les données de capteur du troisième capteur sont également fournies à l'unité d'analyse et de commande (14) et analysées par celle-ci.

13. Dispositif selon l'une des revendications 9 à 12, dans lequel lors d'une concordance du modèle de comportement, une adaptation d'une interface utilisateur (12) du véhicule est effectuée.

14. Dispositif selon l'une des revendications 9 à 13, dans lequel lors d'une concordance du modèle de comportement, une fonction d'un système d'assistance au conducteur (13) est exécutée.

15. Véhicule automobile, qui présente un dispositif selon l'une des revendications 9 à 14 ou qui est conçu pour exécuter un procédé selon l'une des revendications 1 à 8.
